# EUROPÄISCHE PATENTSCHRIFT

(11) **EP 2 360 304 B1**
(45) Veröffentlichungstag und Bekanntmachung des Hinweises auf die Patenterteilung: **27.05.2015**
(21) Anmeldenummer: 11000760.6
(22) Anmeldetag: 01.02.2011
(51) Int. Cl.: D04H 1/54, C08L 95/00, B32B 5/00, C08K 5/00, D04H 1/587, D04H 1/645, D04H 1/593, B32B 11/02, B32B 17/04, C08L 3/00, D04H 1/4218, D04H 1/4209

(54) **Vorkonfektionierte Trägereinlage und beschichtete Dachbahnen**
Pre-assembled reinforcement and coated roofing sheets
Garniture de support préfabriquée et bandes de toit revêtues

(30) Priorität: 12.02.2010 DE 102010007939
(43) Veröffentlichungstag der Anmeldung: 24.08.2011
(73) Patentinhaber: Johns Manville Europe GmbH, 86399 Bobingen (DE)
(72) Erfinder: Weiter, Bertrand Claude, 80689 München (DE); Frick, Agnes, 89312 Günzburg (DE); Miowsky, Thomas, 14165 Berlin (DE); Kohler, Markus, 86156 Augsburg (DE); Groh, Werner, 86830 Schwabmünchen (DE)
(74) Vertreter: Mai, Dörr, Besier

(56) Entgegenhaltungen:
- EP-A1- 2 093 274
- DE-A1- 3 830 679
- US-A- 4 368 228

## Beschreibung

Die Erfindung betrifft vorkonfektionierte Trägereinlagen, ein Verfahren zu deren Herstellung sowie Dachbahnen enthaltend eine solche Trägereinlage.

Trägereinlagen zur Herstellung von Dachbahnen müssen vielfältigen Anforderungen genügen. Insbesondere müssen Trägereinlagen eine ausreichende mechanische Stabilität, wie gute Perforationsfestigkeit und gute Zugfestigkeit, aufweisen, die beispielsweise bei der Weiterverarbeitung, wie Bituminierung oder Verlegen, auftreten. Außerdem wird eine hohe Beständigkeit gegen thermische Belastung, beispielsweise beim Bituminieren oder gegen strahlende Wärme, und Widerstandsfähigkeit gegen Flugfeuer verlangt. Es hat daher nicht an Versuchen gefehlt, bestehende Trägereinlagen zu verbessern.

So ist es bereits bekannt, Vliesstoffe auf der Basis von Synthesefaservliesen mit Verstärkungsfasern, beispielsweise mit Glasfasern zu kombinieren, um deren mechanische Stabilität zu verbessern. Beispiele für solche Dichtungsbahnen findet man in den GB-A-1,517,595, DE-Gbm-77-39,489, EP-A-160,609, EP-A-176-847, EP-A-403,403 undEP-A-530,769. Die Verbindung zwischen Faservlies und Verstärkungsfasern erfolgt nach diesem Stand der Technik entweder durch Verkleben mittels eines Bindemittels oder durch Vernadeln der Schichten aus unterschiedlichem Material.

Es ist ferner bekannt, Verbundstoffe durch Wirk- oder Nähwirktechniken herzustellen. Beispiele dafür finden sich in DE-A-3,347,280, US-A-4,472,086, EP-A-333,602 und EP-A-395,548.

Aus der DE-A-3,417,517 ist ein textiler Einlagestoff mit anisotropen Eigenschaften und ein Verfahren zu dessen Herstellung bekannt. Der Einlagestoff besteht aus einem Substrat, das eine unter 150 °C schmelzende Oberfläche besitzt, und damit verbundenen, über 180 °C schmelzenden Verstärkungsfilamenten, die auf dieser Oberfläche parallel zueinander fixiert sind. Gemäß einer Ausführungsform kann es sich bei dem Substrat um einen Vliesstoff handeln, auf dessen einen Oberfläche sich Schmelzklebefasern oder -fäden befinden, die zur Herstellung einer Verklebung der parallel angeordneten Verstärkungsfasern mit dem Vliesstoff vorgesehen sind.

Aus der US-A-4,504,539 ist eine Kombination von Verstärkungsfasern in Form von Bikomponentenfasern mit Vliesstoffen aus der Basis von Synthesefasern bekannt.

Aus der EP-A-0,281,643 ist eine Kombination von Verstärkungsfasern in Form eines Netzes aus Bikomponentenfasern mit Vliesstoffen auf der Basis von Synthesefasern bekannt, wobei der Gewichtsanteil des Netzes aus Bikomponentenfasern mindestens 15 Gew.-% beträgt.

Aus der JP-A-81-5879 ist ein Verbundstoff bekannt, der mit einem netzförmigen Verstärkungsmaterial versehen ist.

Aus der GB-A-2,017,180 ist ein Filtermaterial aus anorganischem Vliesmaterial und Metalldrähten bekannt, das zur Abluftreinigung bei hohen Temperaturen (höher 300°C) eingesetzt wird.

DE-Gbm-295 00 830 beschreibt die Verstärkung eines Glasvlieses mit synthetischen Monofilen. Diese Verstärkungs-Monofile tragen in der Dichtungsbahn nicht wesentlich zur Bezugskraft bei geringen Dehnungen bei. Sie weisen aber eine deutlich höhere Höchstzugkraftdehnung auf als das Glasvlies; somit wird der flächige Zusammenhang der Dichtungsbahn auch noch bei Verformungen gewährleistet, die zum Bruch des Glasvlieses führen können. Der Schrumpf der synthetischen Monofile ist höher als der Schrumpf des Glasvlieses und kann in der Dichtungsbahn zur Welligkeit führen.

Auch aus der DE-A-3,941,189 ist eine Kombination von Verstärkungsfasern in Form einer Fadenkette mit Vliesstoffen auf der Basis von Synthesefasern bekannt, die auf verschiedenste Arten miteinander verbunden werden können. In dieser Anmeldung wird betont, dass sich der Young-Modul der verstärkten Trägereinlage sich gegenüber einem unverstärkten Basisvlies nicht ändert.

Aus EP-A-0,806,509 und EP-A-0,806,510 sind Trägereinlagen, enthaltend ein textiles Flächengebilde und eine Verstärkung, bekannt, die bereits bei einer geringen Dehnung die einwirkende Kraft aufnehmen. Derartige Trägereinlagen zeigen gute anwendungstechnische Eigenschaften, dennoch besteht die ständige Aufgabe, auch diese Produkte noch zu verbessern.

Die aus dem Stand der Technik bekannten Trägereinlagen werden üblicherweise mit einer Beschichtung versehen. Hierzu werden die Trägereinlagen - je nach geplanter Verwendung - durch entsprechende Tauchbäder, z. B. mit Bitumen, geführt oder aber mit einer Auftragsmasse versehen. Hierbei wird die offene Struktur, die einen - mehr oder weniger - großen Anteil an leerem Volumen darstellt, gefüllt. Aufgrund des großen Luftvolumens innerhalb der Trägereinlage ist ein erhebliches Volumen an Tränkbitumen notwendig, um die Luft vollständig durch Bitumen zu ersetzen.

Insofern die Sättigung mit Tränkbitumen nicht ausreichend ist, werden die für die spätere Verwendung notwendigen Eigenschaften, wie z. B. Delaminierung und die Aufnahme von Feuchtigkeit erheblich in Mitleidenschaft gezogen bzw. nicht erreicht.

Aus diesen Gründen wird im Stand der Technik eine vollständige Vortränkung des Trägers durchgeführt, indem der Träger durch ein Vortränkbad, beispielsweise mit hoch-viskosem, in der Regel nicht gefülltem Bitumen, hindurchgeführt wird, um somit die vorhandene Luft aus dem Träger zu entfernen.

Das DE-Gbm 20 2008 010 258.8 offenbart eine Trägereinlage, deren Dichte mittels spezieller kompressiver Kalandrierung erhöht bzw. deren freies Porenvolumen reduziert wurde, sodass die zur Sättigung notwendige Menge an Tränkbitumen reduziert wird.

Die im Stand der Technik bekannten Verarbeitungsprozesse zur fertigen Dachbahn sind nach wie vor aufwendig und kompliziert und erfordern mehrere Verfahrensschritte um eine ausreichende Sättigung der Trägereinlage mit der Tränkmasse zu erreichen. Insbesondere die saisonale Verfügbarkeit und Preisschwankungen der notwendigen Spezialbitumina, auch vor dem Hintergrund einer flexibleren und schnelleren Produktion der Dachbahnen, ist eine bessere Abstimmung und teilweise Rückintegration zwischen Produzenten der Trägereinlagen und deren Dachbahnkunden wünschenswert.

Aufgrund der hohen Kosten von Spezialbitumina zur Füllung der Trägereinlage und den zusätzlichen Verfahrensschritten, welcher zu einer weiteren erheblichen Verteuerung des Verfahrens führt, ist ein neuer Ansatz zur Herstellung von beschichteten Trägereinlagen wünschenswert.

Es ist somit noch ein erheblicher Bedarf an Produkten vorhanden, die die Verarbeitung zur fertigen Dachbahn vereinfachen, ohne dass die Eigenschaften des fertigen Trägers nachteilig beeinflusst werden oder aber die Verlegung aufwendiger wird.

Aufgabe der vorliegenden Erfindung war somit verbesserte Trägereinlagen bereitzustellen, welche in kommerziellen Mengen kostengünstig hergestellt werden können, und andererseits in bekannten, aber vereinfachten Verfahren, mit einer Beschichtung versehen werden können.

Gegenstand der vorliegenden Erfindung ist somit eine vorkonfektionierte Trägereinlage enthaltend mindestens ein textiles Flächengebilde, dessen Flächengewicht zwischen 50 bis 500 g/m² beträgt, wobei sich die vorstehenden Angaben auf ein textiles Flächengebilde ohne chemische Binder und sonstige Additive bezieht, dadurch gekennzeichnet, dass das textile Flächengebilde mit einer Mischung enthaltend:
a) mindestens eine wässrige Bitumen-Emulsion und
b) mindestens einem zur Vernetzung befähigten Additiv, vorzugsweise einem thermisch und/oder selbstvernetzenden Additiv und/oder mindestens einer Stärke,
gefüllt wurde.

### TEXTILES FLÄCHENGEBILDE

Der Begriff "textiles Flächengebilde" ist im Rahmen dieser Beschreibung in seiner breitesten Bedeutung zu verstehen. Dabei kann es sich um alle Gebilde aus Fasern basierend auf synthetischen Polymeren handeln, die nach einer flächenbildenden Technik hergestellt worden sind. Bei den faserbildenden Materialien handelt es sich um Fasern aus synthetischen Polymeren, wobei diese auch in Form von Gemischen mit keramischen Fasern, Mineralfasern oder Glasfasern verwendet werden können. Der Hauptteil der Fasern des textilen Flächengebildes, d. h. mindestens 50 Gew.-% der Fasern des textilen Flächengebildes, basiert auf synthetischen Polymeren. Der Anteil von keramischen Fasern, Mineralfasern oder Glasfasern beträgt vorzugsweise bis zu 30 Gew.-%, insbesondere bis zu 10 Gew.-%, bezogen auf das Gesamtgewicht des textilen Flächengebildes.

Bei den textilen Flächengebilden handelt es sich üblicherweise um Gewebe, Gelege, Gestricke, Filze, Vliese und Gewirke, vorzugsweise um Vliese.

Von den Vliesen aus Fasern aus synthetischen Polymeren sind Spinnvliese, sogenannte Spunbonds, die durch eine Wirrablage frisch schmelzgesponnener Filamente erzeugt werden, bevorzugt. Sie bestehen aus Endlos-Synthesefasern aus schmelzspinnbaren Polymermaterialien. Geeignete Polymermaterialien sind beispielsweise Polyamide, wie z. B. Polyhexamethylen-diadipamid, Polycaprolactam, aromatische oder teilaromatische Polyamide ("Aramide"), aliphatische Polyamide, wie z. B. Nylon, teilaromatische oder vollaromatische Polyester, Polyphenylensulfid (PPS), Polymere mit Ether- und Keto-gruppen, wie z. B. Polyetherketone (PEK) und Poly-etheretherketon (PEEK), Polyolefine, wie z. B. Polyethylen oder Polypropylen, oder Polybenzimidazole.

Bevorzugt bestehen die Spinnvliese aus schmelzspinnbaren Polyestern. Als Polyestermaterialien kommen im Prinzip alle zur Faserherstellung geeigneten bekannten Typen in Betracht. Derartige Polyester bestehen überwiegend aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2 bis 4 C-Atome, wobei das Ethylenglycol besonders geeignet ist. Besonders vorteilhaft sind Spinnvliese, die zu mindestens 85 mol % aus Polyethylenterephthalat bestehen. Die restlichen 15 mol % bauen sich dann aus Dicarbonsäureeinheiten und Glycoleinheiten auf, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste der Isophthalsäure oder von aliphatischen Dicarbonsäure wie z. B. Glutarsäure, Adipinsäure, Sebacinsäure; Beispiele für modifizierend wirkende Diolreste sind solche von längerkettigen Diolen, z. B. von Propandiol oder Butandiol, von Di- oder Triethylenglycol oder, sofern in geringer Menge vorhanden, von Polyglycol mit einem Molgewicht von ca. 500 bis 2000.

Besonders bevorzugt sind Polyester, die mindestens 95 mol % Polyethylenterephthalat (PET) enthalten, insbesondere solche aus unmodifiziertem PET.

Sollen die erfindungsgemäßen Trägereinlagen zusätzlich eine flammhemmende Wirkung haben, so ist es von Vorteil, wenn sie aus flammhemmend modifizierten Polyestern ersponnen wurden. Derartige flammhemmend modifizierten Polyester sind bekannt. Sie enthalten Zusätze von Halogenverbindungen, insbesondere Bromverbindungen, oder, was besonders vorteilhaft ist, sie enthalten Phosphonverbindungen, die in die Polyesterkette einkondensiert sind.

Besonders bevorzugt enthalten die Spinnvliese flammhemmend modifizierte Polyester, die in der Kette Baugruppen der Formel (I) 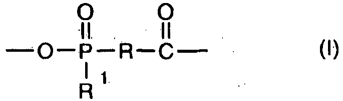 worin R Alkylen oder Polymethylen mit 2 bis 6 C-Atomen oder Phenyl und R¹ Alkyl mit 1 bis 6 C-Atomen, Aryl oder Aralkyl bedeutet, einkondensiert enthalten. Vorzugsweise bedeuten in der Formel (I) R Ethylen und R¹ Methyl, Ethyl, Phenyl, oder o-, m- oder p-Methyl-phenyl, insbesondere Methyl. Derartige Spinnvliese werden z. B. in der DE-A-39 40 713 beschrieben.

Die in den Spinnvliesen enthaltenen Polyester haben vorzugsweise ein Molekulargewicht entsprechend einer intrinsischen Viskosität (IV), gemessen in einer Lösung von 1 g Polymer in 100 ml Dichloressigsäure bei 25 °C, von 0,6 bis 1,4.

Die Einzeltiter der Fasern auf Basis synthetischer Polymere, insbesondere der Polyesterfilamente im Spinnvlies, betragen zwischen 1 und 16 dtex, vorzugsweise 2 bis 8 dtex.

Die erfindungsgemäß eingesetzten textilen Flächengebilde sind im Wesentlichen frei von chemischen Bindern, d. h. sie enthalten zwischen 0 und bis zu 10 Gew.-% (bezogen auf das textile Flächengebilde) an chemischen Bindern. Besonders bevorzugt sind textile Flächengebilde, die keinen Zusatz an chemischen Bindern aufweisen. Insofern es sich bei den textilen Flächengebilden um Vliese auf Basis von Polymeren, insbesondere schmelzspinnbaren Polymeren handelt, werden diese ausschließlich mechanisch verfestigt und enthalten keinerlei chemischen Binder.

In einer bevorzugten Ausführungsform der Erfindung ist das textile Flächengebilde einer mechanischen Verfestigung unterzogen worden. Eine derartige Verfestigung verbessert die Anwendungseigenschaften der Trägereinlage.

Die Verfestigung kann in Einzelmaßnahmen erfolgen oder gemeinsam, wobei insbesondere bei der Anwesenheit von Verstärkungen darauf zu achten ist, dass eine ggf. anwesende Verstärkung nicht bzw. nur sehr gering geschädigt wird. Die Verfestigung erfolgt mittels bekannter Methoden. Ohne hiermit die möglichen Methoden zu beschränken, sind mechanische Methoden, wie Vernadelung, insbesondere hydrodynamische Verfestigung, geeignet.

Insofern die Verfestigung mechanisch durch Vernadelung erfolgt, so wird diese mit Stichdichten von 20 bis 100 Stichen/cm², vorzugsweise bei 40 Stichen/cm², durchgeführt.

Bei der hydrodynamischen Verfestigung handelt es sich bevorzugt um eine Wasserstrahl-Vernadelung. Der Druck bei der Wasserstrahl-Vernadelung beträgt vorzugsweise zwischen 5 und 600 bar, insbesondere zwischen 50 und 450 bar, besonders bevorzugt zwischen 100 und 300 bar.

Der Düsendurchmesser beträgt zwischen 0,05 und 0,25 mm, vorzugsweise zwischen 0,07 und 0,2 mm. Die Düsen werden in Form von so genannten Balken angeordnet. Die Anzahl der Düsen beträgt zwischen 10 und 60 Düsen pro inch, vorzugsweise zwischen 20 und 40 Düsen pro inch.

Anstelle von Wasser können auch andere flüssige Medien verwendet werden und die Wasserstrahl-Vernadelung kann in mehreren voneinander getrennten Schritten erfolgen. Die Wasserstrahl-Vernadelung kann mittels kontinuierlichem Wasserstrahl erfolgen oder aber auch mittels eines gepulsten Wasserstrahls, wobei die Pulsfrequenz keiner besonderen Einschränkung unterliegt. Insbesondere bei Vorliegen von Verstärkungen ist die Wasserstrahl-Vernadelung bevorzugt.

Die die Vliesstoffe aufbauenden Polymerfasern, Filamente und/oder Stapelfasern, können einen praktisch runden Querschnitt besitzen oder auch andere Formen aufweisen, wie hantel-, nierenförmige, dreieckige bzw. tri- oder multilobale Querschnitte.

Das textile Flächengebilde kann ein oder mehrschichtig aufgebaut sein.

Die das textile Flächengebilde bildenden Fasern können durch übliche Zusätze modifiziert sein, beispielsweise durch Antistatika, wie Ruß.

Das Flächengewicht des textilen Flächengebildes, insbesondere des Spinnvlieses, beträgt zwischen 50 und 500 g/m², vorzugsweise 50 und 400 g/m², insbesondere 50 und 300 g/m², wobei sich die vorstehenden Angaben auf ein textiles Flächengebilde ohne chemische Binder und sonstige Additive beziehen.

Das erfindungsgemäß eingesetzte textile Flächengebilde besitzt vorzugsweise eine Luftdurchlässigkeit zwischen 10.000 und 500 I/m² sec @ 200Pa gemessen gemäß EN-ISO 9237.

Das erfindungsgemäß eingesetzte textile Flächengebilde besitzt vorzugsweise eine Höchstzugkraft (in Längsrichtung) von mindestens 100 N/5 cm, besonders bevorzugt mindestens 200 N/5 cm gemessen gemäß DIN 29073, Teil 3.

Das erfindungsgemäß eingesetzte textile Flächengebilde besitzt vorzugsweise eine Höchstzugkraft (in Querrichtung) von mindestens 50 N/5 cm, besonders bevorzugt mindestens 100 N/5 cm gemessen gemäß DIN 29073, Teil 3.

Das erfindungsgemäß eingesetzte textile Flächengebilde besitzt vorzugsweise einen Perforationswiderstand von mindestens 300 N gemessen gemäß DIN 54 307.

Besonders bevorzugt wird ein textiles Flächengebilde eingesetzt, welches eine Kombination der vorstehend genannten Parameter aus Luftdurchlässigkeit, Höchstzugkraft (in Längs- und/oder Querrichtung), aufweist. Insbesondere bevorzugt wird ein textiles Flächengebilde eingesetzt, welches eine Kombination der vorstehend genannten Parameter aus Luftdurchlässigkeit, Höchstzugkraft (in Längs- und/oder Querrichtung) und Perforationswiderstand, aufweist.

Das in der erfindungsgemäßen Trägereinlage vorhandene textile Flächengebilde, insbesondere eines auf Basis von Polymerfasern, kann auch einer Kalandrierung unterzogen werden.

In einer bevorzugten Ausführungsform wird das textile Flächengebilde mittels einer speziellen Kalandrierung verdichtet. Liegt die Dichte vor der Kalandrierung im Bereich von ca. 0,1 bis 0,2 g/cm³, so liegt die Dichte des textilen Flächengebildes nach der Kalandrierung vorzugsweise bei mindestens 0,22 g/cm³, insbesondere bei mindestens 0,25 g/cm³, besonders bevorzugt bei mindestens 0,3 g/cm³. Besonders bevorzugt wird die Dichte um min. 50%, insbesondere bevorzugt um min. 70% erhöht. Die vorstehenden Angaben beziehen sich auf textile Flächen auf Basis von Polyestern und sind bei Einsatz von textilen Flächengebilden aus anderen Werkstoffen entsprechend dem Dichteverhältnis Polyester zu anderem Werkstoff anzupassen. Diese Variationen sind für den Fachmann ohne erfinderisches Zutun zugänglich und werden von der vorliegenden Erfindung umfasst.

Die Dicke des textilen Flächengebildes verringert sich durch die Kalandrierung vorzugsweise um mindestens 30%, insbesondere um mindestens 40%, besonders bevorzugt um mindestens 45%. Liegt die Dicke vor der Kalandrierung im Bereich von ca. 1 bis 2 mm, so liegt die Dicke des textilen Flächengebildes nach der Kalandrierung vorzugsweise bei weniger als 1 mm, insbesondere bei weniger als 0,8 mm, besonders bevorzugt bei 0,75 mm und weniger. Die vorstehenden Angaben beziehen sich auf textile Flächen auf Basis von Polyestern und sind bei Einsatz von textilen Flächengebilden aus anderen Werkstoffen entsprechend anzupassen. Diese Variationen sind für den Fachmann ohne erfinderisches Zutun zugänglich und werden von der vorliegenden Erfindung umfasst.

Mittels der kompressiven Kalandrierung wird die Luftdurchlässigkeit auf einen Wert zwischen 250 und 1000 l/m² sec (gemessen gemäß EN-ISO 9237), vorzugsweise zwischen 300 und 900 l/m² sec, insbesondere zwischen 350 und 750 l/m² sec, eingestellt, so dass das textile Flächengebilde bei einer nachfolgenden Beschichtung bzw. Bituminierung der erfindungsgemäßen Trägereinlage eine geringere Aufnahme von Tränkmasse bzw. Tränkbitumen ermöglicht. Der Einsatz einer solchen erfindungsgemäßen Trägereinlage führt zu einer Verringerung von Produktionskosten und Materialeinsatz.

Die Kalandrierung erfolgt vorzugsweise mit einem Liniendruck von 100 bis 150daN/cm, insbesondere 125 bis 140daN/cm. Die Oberflächentemperatur der Kalanderwalzen beträgt vorzugsweise zwischen 180 und 260°C, insbesondere zwischen 225 und 250°C. Die vorstehenden Angaben beziehen sich auf textile Flächen auf Basis von Polyestern und sind bei Einsatz von textilen Flächengebilden aus anderen Werkstoffen entsprechend anzupassen. Diese Variationen sind für den Fachmann ohne erfinderisches Zutun zugänglich und werden von der vorliegenden Erfindung umfasst.

Die Kalandrierung, insbesondere die Kalandrierung mittels S-Kalandrierung, d. h. mittels einer S-förmigen Umschlingung, steigert die zusätzlich die thermische Dimensionsstabilität des textilen Flächengebildes. So wird in Längsrichtung eine Verbesserung der Dimensionsstabilität von min. 20% (bezogen auf die Dimensionsstabilität vor der Kalandrierung), vorzugsweise von min. 25% ermittelt und in Querrichtung eine Verbesserung der Dimensionsstabilität von min. 30% (bezogen auf die Dimensionsstabilität vor der Kalandrierung), vorzugsweise von min. 35% ermittelt. Die TDS wird gemessen gemäß DIN 18192

In einer bevorzugten Ausführungsform wirken bei der vorstehenden Kalandrierung keine zusätzlichen Zugkräfte, außer den bei S-Kalandrierungen üblichen, ein.

### VERSTÄRKUNG DER TRÄGEREINLAGE

In einer bevorzugten Ausführungsform der Erfindung weist die Trägereinlage mindestens eine Verstärkung auf. Diese ist vorzugsweise derart gestaltet, dass die Verstärkung eine Kraft aufnimmt, sodass sich im Kraft-Dehnungs-Diagramm (bei 20 °C) die Bezugskraft der Trägereinlage mit Verstärkung verglichen mit der Trägereinlage ohne Verstärkung im Bereich zwischen 0 und 1 % Dehnung an mindestens einer Stelle um mindestens 10 % unterscheidet.

In einer weiteren Ausführungsform kann die Verstärkung der Trägereinlage auch so eingebaut werden, dass eine Kraftaufnahme durch die Verstärkung erst bei höheren Dehnungen erfolgt.

Die guten mechanischen Eigenschaften der erfindungsgemäßen Trägereinlage werden insbesondere durch Verstärkungs-Fäden und/oder -Garne erhalten, deren Young-Modul mindestens 5 GPa, bevorzugt mindestens 10 GPa, besonders bevorzugt mindestens 20 GPa, betragen. Die vorstehend genannten Verstärkungsfäden, d. h. sowohl die Monofile als auch die Garne, haben einen Durchmesser zwischen 0,1 und 1 mm oder 10 - 400 tex, vorzugsweise 0,1 und 0,5 mm, insbesondere 0,1 und 0,3 mm und besitzen eine Bruchdehnung von 0,5 bis 100 %, vorzugsweise 1 bis 60 %. Besonders vorteilhaft weisen die erfindungsgemäßen Trägereinlagen eine Dehnungsreserve von weniger als 1 % auf.

Als Dehnungsreserve wird die Dehnung bezeichnet, die auf die Trägereinlage einwirkt, bevor die einwirkende Kraft auf die Verstärkungsfäden abgeleitet wird, d. h., eine Dehnungsreserve von 0 % würde bedeuten, dass auf die Trägereinlage einwirkende Zugkräfte sofort auf die Verstärkungsfäden abgeleitet werden würden. Dies bedeutet, dass auf das Vlies einwirkende Kräfte nicht erst eine Ausrichtung bzw. Orientierung der Verstärkungsfäden bewirken sondern vielmehr direkt auf die Verstärkungsfäden abgeleitet werden, sodass eine Schädigung des textilen Flächengebildes vermieden werden kann. Dies zeigt sich insbesondere in einem steilen Anstieg der aufzuwendenden Kraft bei kleinen Dehnungen (Kraft-Dehnungs-Diagramm bei Raumtemperatur). Zusätzlich kann mit Hilfe geeigneter Verstärkungsfäden, die eine hohe Bruchdehnung aufweisen, die Höchstzugkraft der Trägereinlage erheblich verbessert werden. Geeignete Verstärkungsfäden sind beispielsweise Mono- oder Multifilamente aus Polyester.

Bevorzugt werden als Verstärkungsfäden Multifilamente und/oder Monofilamente auf Basis von Aramiden, vorzugsweise sogenannte Hoch-Modul-Aramide, Kohlenstoff, Glas, Glasrovings, Mineralfasern (Basalt), hochfeste Polyester-Monofilamente oder -Multifilamente, hochfeste Polyamid-Monofilamente oder - Multifilamente sowie sogenannte Hybridmultifilamentgarne (Garne enthaltend Verstärkungsfasern und tiefer schmelzende Bindefasern) oder Drähte (Monofilamente) aus Metallen oder metallischen Legierungen eingesetzt.

Bevorzugte Verstärkungen bestehen aus wirtschaftlichen Gründen aus Glas-Multifilamenten in Form von - im Wesentlichen - parallelen Fadenscharen oder Gelegen. Meist erfolgt nur eine Verstärkung in Längsrichtung der Vliesstoffe durch - im Wesentlichen -parallel laufende Fadenscharen.

Die Verstärkungsfäden können als solche oder auch in Form eines eigenen textilen Flächengebildes, beispielsweise als Gewebe, Gelege, Gestrick, Gewirke oder als Vlies eingesetzt werden. Bevorzugt werden Verstärkungen mit zueinander parallel laufenden Verstärkungsgarnen, also Kettfadenscharen sowie Gelege oder Gewebe.

Die Fadendichte kann in Abhängigkeit vom gewünschten Eigenschaftsprofil in weiten Grenzen schwanken. Bevorzugt beträgt die Fadendichte zwischen 20 und 250 Fäden pro Meter. Die Fadendichte wird senkrecht zur Fadenlaufrichtung gemessen. Die Verstärkungsfäden werden vorzugsweise während der Spinnvliesbildung zugeführt und somit in das Spinnvlies eingebettet. Ebenso bevorzugt ist eine Vliesablage auf die Verstärkung oder eine nachträgliche Schichtbildung aus Verstärkung und Vliesstoff durch Assemblieren.

Bevorzugte, erfindungsgemäße Trägereinlagen weisen mindestens eine Verstärkung auf und zeigen im Kraft-Dehnungs-Diagramm (bei 20 °C), dass die Bezugskraft der Trägereinlage mit Verstärkung verglichen mit der Trägereinlage ohne Verstärkung im Bereich zwischen 0 und 1 % Dehnung an mindestens einer Stelle um mindestens 10 % unterscheidet, vorzugsweise um mindestens 20 %, insbesondere bevorzugt um mindestens 30 %.

Für eine Reihe von Anwendungen wird aber ein hoher Modul bei geringen Dehnungen auch bei Zimmertemperatur gewünscht. Dieser hohe Modul verbessert die Handhabbarkeit, insbesondere bei leichten Vliesstoffen.

Je nach Anforderungsprofil und auch nach Kostengesichtspunkten kann die Bezugskraft der verstärkten Trägereinlage bei geringen Dehnungen in unterschiedlichen Anteilen auf das textile Flächengebilde bzw. auf die Verstärkungen verteilt sein.

Die Messung der Bezugskraft erfolgt nach EN 29073, Teil 3, an 5 cm breiten Proben bei 200mm Einspannlänge. Der Zahlenwert der Vorspannkraft, angegeben in Centi-newton entspricht dabei dem Zahlenwert der Flächenmasse der Probe, angegeben in Gramm pro Quadratmeter.

Die Verstärkung der Trägereinlage kann durch Einbau der Verstärkungen im textilen Flächengebilde, an mindestens einer Seite des textilen Flächengebildes oder aber an einer beliebigen Stelle der Trägereinlage erfolgen, insbesondere in weiteren textilen Flächengebilden, die vom ersten textilen Flächengebilde verschieden sind oder als eigenständiges textiles Flächengebilde.

### WEITERE TEXTILE FLÄCHEN

Die erfindungsgemäße Trägereinlage kann neben dem bereits beschriebenen textilen Flächengebilde noch weitere textile Flächengebilde aufweisen. Bevorzugt sind diese weiteren textilen Flächengebilde von dem erstgenannten textilen Flächengebilde verschieden, d. h. bestehen aus einem anderen Material oder weisen andere Beschaffenheiten, insbesondere physikalische Beschaffenheiten, auf.

Insofern das textile Flächengebilde aus synthetischen Polymeren aufgebaut wird, kann es zur Optimierung der anwendungstechnischen Eigenschaften notwendig werden, weitere textile Flächengebilde in der erfindungsgemäßen Trägereinlage einzubauen.

Bei den weiteren textilen Flächengebilden handelt es sich vorzugsweise um Flächengebilde auf Basis von Mineral- und/oder keramischen Fasern sowie Glasfasern.

Bei textilen Flächengebilden aus Mineral- und keramischen Fasern handelt es sich um Alumosilikat-, Keramik-, Dolomit- Wollastonitfasern oder aus Fasern von Vulkaniten, vorzugsweise Basalt-, Diabas- und/oder Melaphyrfasern, insbesondere Basaltfasern. Diabase und Melaphyre werden zusammengefasst als Paläobasalte bezeichnet und Diabas wird auch gerne als Grünstein bezeichnet.

Das Mineralfaservlies kann aus Filamenten, d. h. unendlich langen Fasern oder aus Stapelfasern gebildet werden. Die durchschnittliche Länge der Stapelfasern im erfindungsgemäß eingesetzten Vlies aus Mineralfasern beträgt zwischen 5 und 120 mm, vorzugsweise 8 bis 90 mm. In einer weiteren Ausführungsform der Erfindung enthält das Mineralfaservlies eine Mischung aus Endlosfasern und Stapelfasern.
Der durchschnittliche Faserdurchmesser der Mineralfasern beträgt zwischen 5 und 30 µm, vorzugsweise zwischen 8 und 24 µm, besonders bevorzugt zwischen 8 und 16µm.

Das Flächengewicht des textilen Flächengebildes aus Mineralfasern beträgt zwischen 20 und 500 g/m², vorzugsweise 30 und 250 g/m², besonders bevorzugt zwischen 50 und 90 g/m².

Bei den textilen Flächen aus Glasfasern sind insbesondere Vliese bevorzugt. Diese werden aus Filamenten, d. h. unendlich langen Fasern oder aus Stapelfasern aufgebaut. Die durchschnittliche Länge der Stapelfasern beträgt zwischen 5 und 120 mm, vorzugsweise 8 bis 90 mm. In einer weiteren Ausführungsform der Erfindung enthält das Glasfaservlies eine Mischung aus Endlosfasern und Stapelfasern.

Der durchschnittliche Durchmesser der Glasfasern beträgt zwischen 5 und 30 µm, vorzugsweise zwischen 8 und 24 µm, besonders bevorzugt zwischen 10 und 21µm.

Neben den vorstehend genannten Durchmessern können auch so genannte GlasMikrofasern Verwendung finden. Der bevorzugte durchschnittliche Durchmesser der Glasmikrofasern ist hierbei zwischen 0,1 und 5 µm. Die die textile Fläche bildenden Mikrofasern können auch in Mischungen mit anderen Fasern, vorzugsweise Glasfasern vorliegen. Außerdem ist auch ein schichtförmiger Aufbau aus Mikrofasern und Glasfasern möglich oder aber die Einstellung eines Gradienten, bei dem der Gehalt an Mikrofasern, zu der dem Träger abgewandten Seite des textilen Flächengebildes, ansteigt.

Das Flächengewicht des textilen Flächengebildes aus Glasfasern beträgt zwischen 20 und 500 g/m², vorzugsweise 30 und 250 g/m², besonders bevorzugt zwischen 50 und 90 g/m².

Geeignete Glasfasern umfassen jene, die aus A-Glas, E-Glas, S-Glas, C-Glas, T-Glas oder R-Glas hergestellt wurden.

Die textile Fläche kann nach jedem bekannten Verfahren hergestellt werden. Bei Glasvliesen ist dies bevorzugt das Trocken- oder Nasslegeverfahren.

Insofern es sich bei den textilen Flächengebilden um Vliese auf Basis von anorganischen Faser-Materialien, insbesondere um Glas und/oder mineralische Materialien handelt, können diese mechanisch und/oder mittels chemischer Binder verfestigt sein, wobei der Gehalt an chemischen Bindern bis zu 45 Gew.-% (bezogen auf das weitere textile Flächengebilde) betragen kann. Als chemische Binder kommen insbesondere chemische Binder auf Basis von Acrylaten oder Styrolen, insbesondere aber Harnstoff oder Melaminbinder in Frage.

Neben den vorstehend genannten zusätzlichen textilen Flächengebilden können die erfindungsgemäßen Trägereinlagen mit weiteren Funktionsschichten ausgerüstet werden. Hierunter sind Maßnahmen bzw. Funktionsschichten zu verstehen, welche die beispielsweise die Wurzelfestigkeit der Trägereinlage zu erhöhen. Diese sind ebenfalls Gegenstand der Erfindung.

Die erfindungsgemäße vorkonfektionierte Trägereinlage weist bevorzugt mit mindestens 15 Gew% der Mischung aus Tränk-Bitumen auf (nach Trocknung, insbesondere bei Temperaturen von bis zu 200°C). Besonders bevorzugt ist die erfindungsgemäße vorkonfektionierte Trägereinlage im Wesentlichen vollständig mit der Mischung aus Tränk-Bitumen getränkt, d. h., das freie Porenvolumen beträgt maximal 10 Volumen-%.

Durch Einsatz der Mischung aus Tränk-Bitumen bereits im Rahmen der Herstellung der Trägereinlage kann auf den Einsatz von chemischen Bindern und/oder Schmelzbinder-Fasern zur Vorverfestigung der textilen Flächengebilde vollständig bzw. bei Flächengebilden auf Basis von Mineral- und/ oder keramischen Fasern oder Glasfaser weitestgehend verzichtet werden.

### TRÄNK-BITUMEN MISCHUNG

Die Füllung der erfindungsgemäß eingesetzten textilen Flächengebilde erfolgt durch eine Mischung umfassend:
a) mindestens eine wässrige Bitumen-Emulsion und
b) mindestens einem zur Vernetzung befähigten Additiv, vorzugsweise einem thermisch und/oder selbstvernetzenden Additiv und/oder mindestens einer Stärke.

Die zur Füllung eingesetzte Mischung weist vorzugsweise 10 bis 90 Gew.-% wässrige Bitumen-Emulsion und 90 bis 10 Gew.-% an zur Vernetzung befähigtem Additiv, vorzugsweise einem thermisch und/oder selbstvernetzenden Additiv und/oder Stärke auf. Besonders bevorzugt weist die Mischung 30 bis 70 Gew.-% wässrige Bitumen-Emulsion und 70 bis 30 Gew.-% an zur Vernetzung befähigtem Additiv, vorzugsweise einem thermisch und/oder selbstvernetzenden Additiv und/oder Stärke auf. Insbesondere bevorzugt weist die Mischung 40 bis 60 Gew.-% wässrige Bitumen-Emulsion und 60 bis 40 Gew.-% an zur Vernetzung befähigtem Additiv, vorzugsweise einem thermisch und/öder selbstvernetzenden Additiv und/oder Stärke auf, wobei sich die Angaben auf den Feststoffgehalt beziehen.

### Bitumen-Emulsionen

Bei den erfindungsgemäß eingesetzten wässrigen Bitumen-Emulsionen handelt es sich in klassischer Weise hergestellte Emulsionen von bituminösem Bindemitteln, die durch Mischen in einem geeigneten Mischer von einer dispergierten Phase und einer dispergierenden Phase hergestellt.
Die dispergierte Phase kann entweder aus reinem Bitumen oder aus einem mit einem Flussmittel, einem fließfähig machenden Mittel oder/und einem Elastomeren gemischten Bitumen, d. h. einem modifizierten Bitumen, hergestellt werden.

Die dispergierende Phase umfasst insbesondere Wasser und verschiedene emulgierende oder grenzflächenaktive Mittel.

Die erfindungsgemäß eingesetzte wässrige Bitumen-Emulsion kann zusätzlich grenzflächenaktive Mittel, d. h. anionische, kationische oder nichtionische Mittel aufweisen. Die mit anionischen grenzflächenaktiven Mitteln erhaltenen Emulsionen sind üblicherweise feiner und stärker viskos als solche, welche kationische grenzflächenaktive Mittel enthalten.

Der Feststoffgehalt der erfindungsgemäß eingesetzten wässrigen Bitumen-Emulsion beträgt vorzugsweise min. 40 Gew.-%, besonders bevorzugt 50 Gew.-%, (bestimmt gemäß ASTM 244)

Die erfindungsgemäß eingesetzte wässrige Bitumen-Emulsion kann zusätzlich mineralische Füllstoffe, anorganische Salze, wie CaCO₃, SiO₂ und Bentonite, aufweisen. Diese kommen als hydrophobierte Bestandteile zum Einsatz.

Die erfindungsgemäß eingesetzte wässrige Bitumen-Emulsion kann zusätzlich andere Zusatzstoffe wie Stabilisatoren, Antigelmittel und Verdickungsmittel aufweisen.

Vorzugsweise enthält die erfindungsgemäß eingesetzte wässrige Bitumen-Emulsion zusätzlich natürliche oder synthetische Latices aufweisen. Bevorzugt handelt es sich um synthetischen Latices, insbesondere um ein Latex SBS (Styrol-Butadien-Styrol) und/oder ein Latex SBR (Styrolkautschuk-Butadien) sowie um ein Latex von Polychloropren. Des Weiteren kann die erfindungsgemäß eingesetzte wässrige Bitumen-Emulsion zusätzlich Methacryl-Acryl - Copolymere enthalten und umfasst auch Polymer-modifizierte Bitumenemulsionen.

Geeignete wässrige Bitumen-Emulsion bzw. Latex-modifizierte Bitumen-Emulsionen sind beispielsweise von der Firma Köster Bauchemie AG, Deutschland, sowie von der Firma Colas, Südafrika unter der Bezeichnung Colseal^{™} erhältlich, sowie in den Patenten U.S. Patent 5,405,439 und DE-A-10134765 beschrieben.

### Vernetzer

Bei den erfindungsgemäß eingesetzten zur Vernetzung befähigten Additiven handelt es sich vorzugsweise um thermisch und/oder selbstvernetzende Additive, insbesondere auf Basis von Harnstoff bzw. Harnstoff/Formaldehyd und/oder Melamin bzw. Melamin/Formaldehyd.

Geeignete zur Vernetzung befähigte Additive sind, beispielsweise von der Firma BASF SE, Deutschland, unter der Bezeichnung Urecoll^{®}, erhältlich.

### Stärke

Die erfindungsgemäß eingesetzten Stärken unterliegen keiner Einschränkung, müssen jedoch mit den anderen Komponenten kompatibel sein.

Geeignete erfindungsgemäße Stärken sind natürliche, - so genannte - native, Stärken und modifizierte Stärken, wie kationische oder anionische Stärken, oder Stärkederivate (sog. Chemisch modifizierte Stärken). Allgemein vorteilhaft sind Stärken, die eine ausreichende Kaltlöslichkeit und/oder Heißlöslichkeit besitzen.

Eine Gruppe von Stärken, die im Rahmen der Erfindung zum Einsatz gelangen können, umfasst die aus pflanzlichen Rohstoffen gewonnenen Stärken. Hierzu zählen unter anderem Stärken aus Knollen, wie Kartoffeln, Maniok, Maranta, Batata, aus Samen, wie Weizen, Mais, Roggen, Reis, Gerste, Hirse, Hafer, Sorghum, aus Früchten, wie Kastanien, Eicheln, Bohnen, Erbsen, u. a. Hülsenfrüchten, Bananen, sowie aus Pflanzenmark, z.B. der Sagopalme.

Die im Rahmen der Erfindung verwendbaren Stärken bestehen im Wesentlichen aus Amylose und Amylopektin, in wechselnden Mengenverhältnissen.

Die Molekulargewichte der erfindungsgemäß nützlichen Stärken können über einen weiten Bereich variieren. Die im Wesentlichen aus einem Gemisch von Amylose und Amylopektin bestehenden Stärken haben vorzugsweise Molekulargewichte M_{w} im Bereich zwischen 5x10² und 1x10⁸, besonders bevorzugt zwischen 5x10⁴ und 1x10⁷.

Neben Stärken nativen pflanzlichen Ursprungs sind auch Stärken, die chemisch modifiziert sind, fermentativ gewonnen werden, rekombinanten Ursprungs sind oder durch Biotransformation (Biokatalyse) hergestellt wurden, gleichermaßen bevorzugt.

Synonym für den Begriff "Biotransformation" verwendet man auch den Begriff "Biokatalyse".

Unter "chemisch modifizierten Stärken" versteht man solche Stärken, bei denen auf chemischem Wege die Eigenschaften im Vergleich zu den natürlichen Eigenschaften verändert wurden. Dies wird im Wesentlichen durch polymeranaloge Umsetzungen erreicht, bei denen Stärke mit mono-, bi- oder polyfunktionellen Reagenzien bzw. Oxidationsmitteln behandelt wird. Dabei werden vorzugsweise die Hydroxylgruppen der Stärke durch Veretherung, Veresterung oder selektive Oxidation umgewandelt oder die Modifizierung beruht auf einer radikalisch initiierten Pfropfcopolymerisation von copolymerisierbaren ungesättigten Monomeren auf das Stärkerückgrat.

Zu besonderen chemisch modifizierten Stärken gehören unter anderem Stärkeester, wie Xanthogenate, Acetate, Phosphate, Sulfate, Nitrate, Stärkeether, wie z. B. nichtionische, anionische oder kationische Stärkeether, oxidierte Stärken, wie etwa Dialdehydstärke, Carboxystärke, Persulfat-abgebaute Stärken und ähnliche Substanzen.

"Fermentative Stärken" sind im Sprachgebrauch der Erfindung Stärken, die durch fermentative Prozesse unter Verwendung in der Natur vorkommender Organismen, wie Pilzen, Algen oder Bakterien gewonnen werden oder unter Einschaltung und Mithilfe von fermentativen Prozessen gewonnen werden können. Beispiele für Stärken aus fermentativen Prozessen umfassen neben anderen Gum Arabicum und verwandte Polysaccharide (Gellan Gum, Gum Ghatti, Gum Karaya, Gum Tragacauth), Xanthan, Emulsan, Rhamsan, Wellan, Schizophyllan, Polygalacturonate, Laminarin, Amylose, Amylopektin und Pektine.

Mit "Stärken rekombinanten Ursprungs" oder "rekombinante Stärken" meint die Erfindung im Einzelnen Stärken, die durch fermentative Prozesse unter Verwendung in der Natur nicht vorkommender Organismen, aber unter Zuhilfenahme von gentechnischen Methoden modifizierten natürlichen Organismen, wie Pilzen, Algen oder Bakterien gewonnen werden oder unter Einschaltung und Mithilfe von fermentativen Prozessen gewonnen werden können. Beispiele für Stärken aus fermentativen, gentechnisch modifizierten Prozessen sind neben Anderen Amylose, Amylopektin und Polyglucane.

"Durch Biotransformation hergestellte Stärken" bedeutet im Rahmen der Erfindung, dass Stärken, Amylose, Amylopektin oder Polyglucane durch katalytische Reaktion von monomeren Grundbausteinen, im Allgemeinen oligomeren Sacchariden, insbesondere Mono- und Disacchariden, hergestellt werden, indem ein Biokatalysator (auch: Enzym) unter speziellen Bedingungen verwendet wird. Beispiele für Stärken aus biokatalytischen Prozessen sind neben Anderen Polyglucan und modifizierte Polyglucane, Polyfructan und modifizierte Polyfructane.

Des Weiteren werden auch Derivate der einzelnen genannten Stärken von der Erfindung umfasst. Dabei bedeuten die Begriffe "Derivate von Stärken" oder "Stärkederivate" ganz allgemein modifizierte Stärken, d. h. solche Stärken, bei denen zur Veränderung ihrer Eigenschaften das natürliche Amylose/Amylopektin-Verhältnis verändert wurde, eine Vorverkleisterung durchgeführt wurde, die einem partiellen hydrolytischen Abbau unterzogen wurden oder die chemisch derivatisiert wurden.

Zu besonderen Derivaten von Stärken gehören, unter anderem, oxidierte Stärken, z.B. Dialdehydstärke oder sonstige Oxidationsprodukte mit Carboxylfunktionen, oder native ionische Stärken (z.B. mit Phosphatgruppen) oder ionisch weiter modifizierte Stärken, wobei sowohl anionische als auch kationische Modifizierungen gemeint sind.

Zu den destrukturierten Stärken, die im Rahmen der Erfindung eingesetzt werden können, gehören solche, die z.B. mittels Glyzerin so homogenisiert worden sind, dass in der Röntgendiffraktion keine kristallinen Reflexe mehr auftreten und im Polarisationsmikroskop Stärkekörner oder doppelbrechende Regionen bei tausendfacher Vergrößerung nicht mehr sichtbar sind. In diesem Zusammenhang wird auf die DE-A1-3931363 verwiesen, auf deren Offenbarung zu den destrukturierten Stärken auch Bestandteil dieser Beschreibung ist.

Die erfindungsgemäß eingesetzten Stärken sind im Markt, z. B. von Emsland Stärke GmbH, bzw. Lance Products Inc., NJ, USA, unter der Bezeichnung EMSOL^{®}, erhältlich.

Besonders vorteilhaft sind Stärken, die eine ausreichende Kaltlöslichkeit und/oder eine ausreichende Heißlöslichkeit aufweisen. Eine ausreichende Löslichkeit ist dann gegeben, wenn die Viskosität des erfindungsgemäßen Bindersystems eine entsprechende Verarbeitbarkeit zulässt.

Die erfindungsgemäße vorkonfektionierte Trägereinlage weist vorzugsweise ein Flächengewicht zwischen 60 und 2000 g/m², vorzugsweise 100 und 1200 g/m², insbesondere 120 und 1000 g/m², auf, wobei sich die vorstehende Angabe auf ein mit der erfindungsgemäßen Mischung aus wässriger Bitumen-Emulsion und zur Vernetzung befähigtem Additiv und/oder Stärke, getränktes textiles Flächengebilde ohne sonstige Additive nach Trocknung bezieht. Bevorzugt beträgt der gewichtsmäßige Anteil der erfindungsgemäßen Mischung 15% - 300%, bevorzugt 50% - 300%, besonders bevorzugt 120% - 300% des Flächengewichts der textilen Fläche (nach Trocknung).

Die erfindungsgemäße vorkonfektionierte Trägereinlage besitzt vorzugsweise eine thermische Dimensionsstabilität (TDS) von maximal 5%, besonders bevorzugt maximal 3%, besonders bevorzugt maximal 2,5%, in Längsrichtung und maximal 7%, besonders bevorzugt maximal 5%, besonders bevorzugt maximal 3% in Querrichtung gemessen gemäß DIN 18192. Die hervorragende thermische Dimensionsstabilität ist insbesondere für die spätere Bituminierung beim Kunden wichtig.

Die erfindungsgemäße vorkonfektionierte Trägereinlage besitzt eine Höchstzugkraft (in Längsrichtung) von mindestens 100 N/5 cm, vorzugsweise mindestens 200 N/5 cm, besonders bevorzugt mindestens 450 N/5 cm gemessen gemäß DIN 29073, Teil 3.

Die erfindungsgemäße vorkonfektionierte Trägereinlage besitzt vorzugsweise eine Höchstzugkraft (in Querrichtung) von mindestens 60 N/5 cm, bevorzugt mindestens 150 N/5 cm, und besonders bevorzugt mindestens 350 N/5 cm gemessen gemäß DIN 29073, Teil 3.

Die erfindungsgemäße vorkonfektionierte Trägereinlage besitzt vorzugsweise einen Perforationswiderstand von mindestens 200 N gemessen gemäß DIN 54 307.

Besonders bevorzugt besitzt die erfindungsgemäße vorkonfektionierte Trägereinlage eine Kombination der vorstehend genannten Parameter aus TDS, Höchstzugkraft (in Längs- und/oder Querrichtung). Insbesondere bevorzugt besitzt die erfindungsgemäße vorkonfektionierte Trägereinlage eine Kombination der vorstehend genannten Parameter aus TDS, Höchstzugkraft (in Längs- und/oder Querrichtung) und Perforationswiderstand, aufweist.

### HERSTELLUNG

Die Herstellung der erfindungsgemäßen vorkonfektionierten Trägereinlage umfasst folgende Maßnahmen
a) Bildung eines textilen Flächengebildes und mechanische Verfestigung desselbigen oder Zuführen eines mechanisch verfestigten, textilen Flächengebildes,
b) ggf. Kalandrierung des textilen Flächengebildes und Erhöhung der Dichte des textilen Flächengebildes um min. 50%, insbesondere wenn das textile Flächengebilde erst in Schritt a) gebildet wurde,
c) Sättigung bzw. Tränkung des textilen Flächengebildes mit einer Mischung enthaltend:
   i) mindestens wässrige Bitumen-Emulsion und
   ii) mindestens einem zur Vernetzung befähigtem Additiv, vorzugsweise einem thermisch und/oder selbstvernetzendem Additiv und/oder Stärke,
d) Verpressung bzw. Abquetschen der gesättigten bzw. getränkten textilen Fläche, wobei ggf. überschüssige Mengen der Mischung aus Schritt c) entfernt werden,
e) Trocknen der vorkonfektionierten Trägereinlage,
g) ggf. Aufbringen einer Schutzfolie,
h) Abkühlen, ggf. Zuschneiden, und Aufrollen der vorkonfektionierten Trägereinlage.

Die Bildung des textilen Flächengebildes erfolgt mittels bekannter Maßnahmen. Bevorzugt erfolgt die gemäß a) beschriebene Bildung eines textilen Flächengebildes durch Spinnvliesbildung mittels an sich bekannter Spinnapparate.

Hierzu wird das geschmolzene Polymer durch mehrere hintereinander geschaltete Reihen von Spinndüsen bzw. Gruppen von Spinndüsenreihen mit Polymeren beschickt. Die ausgesponnenen Polymerströme werden in an sich bekannter Weise verstreckt, und z. B. unter Verwendung einer rotierenden Prallplatte in Streutextur auf einem Transportband abgelegt.

Die Durchführung der Verfestigung erfolgt ebenfalls mittels bekannter Methoden, insbesondere durch mechanische Methoden, insbesondere Vernadelung und/oder Kalandrierung.

Der Einbau der gegebenenfalls vorhandenen Verstärkung erfolgt während oder nach der Bildung des textilen Flächengebildes.

Die Zuführung eines gegebenenfalls einzubauenden weiteren textilen Flächengebildes erfolgt mittels bekannter Methoden. Hierbei ist von Vorteil, die gegebenenfalls einzubauende Verstärkung gemeinsam mit dem weiteren textilen Flächengebilde einzubauen oder vor diesem. Im letzteren Falle ist die Verstärkung sandwichartig zwischen den beiden textilen Flächengebilden angeordnet. Die Zuführung der Verstärkung und jede thermische Behandlung im Herstellverfahren der Trägereinlage erfolgt vorzugsweise unter Spannung, insbesondere unter Längsspannung.

Die optionale Kalandrierung in Schritt b) erfolgt vorzugsweise mit einem Liniendruck von 100 bis 150daN/cm, insbesondere 125 bis 140daN/cm. Die Oberflächentemperatur der Kalanderwalzen beträgt vorzugsweise zwischen 180 und 260°C, insbesondere zwischen 225 und 250°C. Die vorstehenden Angaben beziehen sich auf textile Flächen auf Basis von Polyestern und sind bei Einsatz von textilen Flächengebilden aus anderen Werkstoffen entsprechend anzupassen. Diese Variationen sind für den Fachmann ohne erfinderisches Zutun zugänglich und werden von der vorliegenden Erfindung umfasst.

Die optionale Kalandrierung des textilen Flächengebildes in Schritt b) bewirkt eine Verdichtung. Liegt die Dichte vor der Kalandrierung im Bereich von ca. 0,1 bis 0,2 g/cm³, so liegt die Dichte des textilen Flächengebildes nach der Kalandrierung vorzugsweise bei mindestens 0,22 g/cm³, insbesondere bei mindestens 0,25 g/cm³, besonders bevorzugt bei mindestens 0,3 g/cm³. Besonders bevorzugt wird dich Dichte um min. 70% erhöht. Die vorstehenden Angaben beziehen sich auf textile Flächen auf Basis von Polyestern und sind bei Einsatz von textilen Flächengebilden aus anderen Werkstoffen entsprechend dem Dichteverhältnis Polyester zu anderem Werkstoff anzupassen. Diese Variationen sind für den Fachmann ohne erfinderisches Zutun zugänglich und werden von der vorliegenden Erfindung umfasst.

Die Dicke des textilen Flächengebildes verringert sich durch die optionale Kalandrierung vorzugsweise um mindestens 30%, insbesondere um mindestens 40%, besonders bevorzugt um mindestens 45%, und nimmt auf die eingangs genannten Dicken ab.

Die optionale Kalandrierung erfolgt bevorzugt mittels S-Kalandrierung, d.h. mittels einer S-förmigen Umschlingung des textilen Flächengebildes. Diese bewirkt eine Verbesserung der Dimensionsstabilität des textilen Flächengebildes. So wird in Längsrichtung eine Verbesserung der Dimensionsstabilität von min. 20% (bezogen auf die Dimensionsstabilität vor der Kalandrierung), vorzugsweise von min. 25% ermittelt und in Querrichtung eine Verbesserung der Dimensionsstabilität von min. 30% (bezogen auf die Dimensionsstabilität vor der Kalandrierung), vorzugsweise von min. 20% ermittelt.

In einer bevorzugten Ausführungsform wirken bei der vorstehenden Kalandrierung keine zusätzlichen Zugkräfte, außer den bei S-Kalandrierungen üblichen, ein.

Die Sättigung des textilen Flächengebildes in Schritt c) erfolgt ebenfalls mittels bekannter Methoden. Bevorzugt wird das textile Flächengebilde als Warenbahn durch ein mit der Mischung gefülltes Bad geführt oder die Mischung wird auf das textile Flächengebilde aufgesprüht, gerackelt oder auf sonstige Weise auf bzw. in das Vlies aufgebracht. Die Mischung braucht hierzu nicht temperiert werden. Sie kann jedoch auch vorgewärmt werden, um eine ausreichende Vliesfähigkeit bzw. verringerte Viskosität erreicht wird.

Die Verpressung bzw. das Abquetschen des Vlieses in Schritt d) erfolgt vorzugsweise mit Gummiwalzen in bekannter Weise. Das Verpressen in Schritt d) vervollständigt das Tränken des textilen Flächengebildes und beseitigt eventuell noch vorhandene, ungefüllte Bereiche. Die Verpressung in Schritt d) wird vorteilhafterweise so ausgeführt, dass keine gesiegelte Oberfläche entsteht, d.h. die Oberfläche des getränkten Flächengebildes keine vollständig mit Bitumen beschichtete Oberfläche aufweist. Eine solche Oberfläche kann bei der nachfolgenden Bituminierung zu einer Blasenbildung und spätere Delaminierung führen. Eine zu starke Verpressung kann eine zu starke Kompression des getränkten, textilen Flächengebildes bewirken, welches bei einer anschließenden Expansion Hohlräume erzeugt.

Anschließend erfolgt die Trocknung der vorkonfektionierten Trägereinlage mit bekannten Methoden. Bevorzugt wird die vorkonfektionierte Trägereinlage in einem Umluftofen oder mittels IR-Strahler getrocknet.

Anschließend kann die vorkonfektionierte Trägereinlage mit einer Schutzfolie auf dem Fachmann bekannter Weise versehen werden.

Das Abkühlen, Zuschneiden, und Aufrollen der vorkonfektionierten Trägereinlage erfolgt ebenfalls mittels dem Fachmann bekannter Methoden.

Die einzelnen Verfahrens-Maßnahmen sind für sich alleine genommen bekannt, jedoch in der erfindungsgemäßen Kombination bzw. Reihenfolge neu und erfinderisch.

Die erfindungsgemäßen vorkonfektionierten Trägereinlagen eignen sich in hervorragender Weise zur Herstellung von bituminierten Unterspann-, Dach- und Dichtungsbahnen. Insbesondere die ausreichenden mechanischen Eigenschaften in Verbindung mit einer sehr guten thermischen Dimensionsstabilität (TDS) führen zu guten Produkten.

Diese sind ebenfalls ein Gegenstand der vorliegenden Erfindung. Dazu wird das vorkonfektionierte Trägermaterial in an sich bekannter Weise mit der zur Beschichtung eingesetzten Bitumenmasse bei Temperaturen von ca. >120°C behandelt und anschließend gegebenenfalls mit einem körnigen Material, beispielsweise mit Sand, bestreut. Die auf diese Weise hergestellten beschichteten Unterspann-, Dach- und Dichtungsbahnen zeichnen sich durch gute Verarbeitbarkeit aus. Bedingt durch die gute thermische Dimensionsstabilität (TDS) ist die Verarbeitung des erfindungsgemäßen vorkonfektionierten Trägermaterials verbessert.

Die bituminierten Bahnen enthalten mindestens eine in eine Bitumenmatrix eingebettete - vorstehend beschriebene - Trägerbahn bzw. Trägereinlage, wobei der Gewichtsanteil des Bitumens am Flächengewicht der bituminierten Dachbahn vorzugsweise 60 bis 97 Gew.-% und der des Spinnvlieses 3 bis 40 Gew.-% beträgt.

### Beispiele

### Beispiel 1:

### Herstellung eines textilen Flächengebildes bzw. Referenzvlieses:

Es wird ein Endlosfilamentvlies aus Polyethylenterephthalat (PET) hergestellt. Die Vliese werden entsprechend den bekannten Spunbondverfahren durch Ablage von kontinuierlich gesponnenen Filamenten auf ein sich bewegendes Band hergestellt. Durch Verwendung von 9 Spinnbalken werden Vliese mit einem Flächengewicht von 142 g/ m² erreicht. Ohne weitere Verfestigung erfolgt anschließend die Nadelung mit einer Nadelungsdichte von 36 Stichen / cm². Anschließend erfolgt eine standardmäßige Kalandrierung mit einem Liniendruck von 120 daN / cm.

Eine Bindermischung (ohne wässrige Bitumen-Emulsion) wurde aus 90 Gew% Lutofan DS2380 und 10 Gew% Urecoll A hergestellt und dann bei Zimmertempertur (20°C) mittels einem "Matties" Laborfoulard auf das Vlies aufgebracht. Zwei nachfolgende Gummiwalzen dienten zum Abquetschen des Vlieses und damit zur Beseitigung überflüssiger Bindermischung. Die anschließende Trocknung erfolgte in einem "Mathies" Umluftofen bei 200° in bekannter Weise. Die Ergebnisse sind Tabelle 1 dargestellt.

### Beispiel 2 (erfindungsgemäß):

Ein Vlies wurde wie in Beispiel 1 hergestellt. Anstelle der Bindermischung aus Beispiel 1 wurde eine Bindermischung bestehend aus 50 Gew% Colseal S 20 HSV und 50 Gew% Urecoll A eingesetzt.

### Beispiel 3 (erfindungsgemäß):

Ein Vlies wurde wie in Beispiel 1 hergestellt. Anstelle der Bindermischung aus Beispiel 1 wurde eine Bindermischung bestehend aus 50 Gew% Colseal S 20 HSV und 50 Gew% Emsol K85 eingesetzt.

### Beispiel 4 (erfindungsgemäß):

Ein Vlies wurde wie in Beispiel 1 hergestellt. Anstelle der Bindermischung aus Beispiel 1 wurde eine Bindermischung bestehend aus 50 Gew% Aquadere und 50 Gew% Urecoll A eingesetzt.

### Beispiel 5 und 6 (Vergleichsbeispiele):

Ein Vlies wurde wie in Beispiel 1 hergestellt. Anstelle der Bindermischung aus Beispiel 1 wurde eine Bindermischung bestehend aus 100 Gew% Colseal S 20 HSV (Beispiel 5) und 100% Aquadere (Beispiel 6) eingesetzt.

**Tabelle 1**

| Beispiel | | 1 | 2 | 3 | 4 | 5 | 6 |
|---|---|---|---|---|---|---|---|
| Soll - Auftrag | [%] | 20 | 20 | 20 | 20 | 20 | 20 |
| Auftrag | [%] | 20 | 19,3 | 19,4 | 19,2 | 19,1 | 22,8 |
| Gewicht | [g/m²] | 178 | 178 | 178 | 182 | 177 | 188 |
| Höchstzugkraft längs | [N/5cm] | 562 | 497 | 476 | 515 | 513 | 530 |
| Höchstzugkraft quer | [N/5cm] | 454 | 411 | 406 | 413 | 433 | 472 |
| Dehnung längs | [%] | 35,1 | 53,1 | 54,5 | 60,1 | 50,4 | 54,5 |
| Dehnung quer | [%] | 35,5 | 59,5 | 57,0 | 64,6 | 52,6 | 64,5 |
| Weiterreißfestigkeit längs | [N] | 305 | 315 | 317 | 353 | 314 | 360 |
| Weiterreißfestigkeit quer | [N] | 335 | 374 | 352 | 396 | 346 | 410 |
| 200°-Schrumpf längs | [%] | 0,5 | 0,2 | 0,4 | 0,5 | 0,4 | 0,5 |
| 200°-Schrumpf quer | [%] | 0,4 | 0,2 | 0,2 | 0,4 | 0,0 | 0,0 |
| TDS längs | [%] | 1,7 | 1,3 | 1,7 | 2,3 | 5,5 | 8,5 |
| TDS quer | [%] | -1,6 | -1,2 | -1,5 | -2,0 | -13,9 | -17,5 |
| Delaminierung | [N/5cm] | 265 | 183 | 152 | 190 | 251 | 172 |

## Patentansprüche

1. Vorkonfektionierte Trägereinlage enthaltend mindestens ein textiles Flächengebilde dessen Flächengewicht zwischen 50 bis 500 g/m² beträgt, wobei sich die vorstehenden Angabe auf ein textiles Flächengebilde ohne chemische Binder und sonstige Additive bezieht, **dadurch gekennzeichnet, dass** das textile Flächengebilde mit einem Mischung enthaltend:
a) mindestens eine wässrige Bitumen-Emulsion und
b) mindestens einem zur Vernetzung befähigtem Additiv, vorzugsweise einem thermisch und/oder selbstvernetzendem Additiv und/oder mindestens einer Stärke,
gefüllt wurde.

2. Trägereinlage gemäß Anspruch 1, **dadurch gekennzeichnet, dass** das textile Flächengebilde zusätzlichen Verstärkungen aufweist.

3. Trägereinlage gemäß Anspruch 1 oder 2, **dadurch gekennzeichnet, dass** die Trägereinlage mindestens ein weiteres textiles Flächengebilde aufweist, welche von dem erstgenannten textilen Flächengebilde verschieden ist.

4. Trägereinlage gemäß einem oder mehreren der Ansprüche 1 bis 3, **dadurch gekennzeichnet, dass** das textile Flächengebilde aus Fasern aus synthetischen Polymeren gebildet wird.

5. Trägereinlage gemäß Anspruch 4, **dadurch gekennzeichnet, dass** es sich bei dem textilen Flächengebilde um ein Vlies aus Fasern aus synthetischen Polymeren, insbesondere aus schmelzspinnbaren Polymermaterialien, handelt.

6. Trägereinlage gemäß Anspruch 7, **dadurch gekennzeichnet, dass** das textile Flächengebilde ein Vlies auf Basis von Polyesterfasern ist, wobei diese als Stapelfasern und/oder Endlosfasern vorliegen.

7. Trägereinlage gemäß einem oder mehreren der Ansprüche 1 bis 6, **dadurch gekennzeichnet, dass** das textile Flächengebilde keine chemischen Binder aufweist.

8. Trägereinlage gemäß einem oder mehreren der Ansprüche 3 bis 7, **dadurch gekennzeichnet, dass** das weitere textile Flächengebilde ein Vlies auf Basis von anorganischen Faser-Materialien, insbesondere um Glass und/oder mineralische Materialien ist und wobei der Gehalt an chemischen Bindern bis zu 10 Gew.-% (bezogen auf das textile Flächengebilde) beträgt.

9. Trägereinlage gemäß einem oder mehreren der Ansprüche 1 bis 8, **dadurch gekennzeichnet, dass** das gefüllte textile Flächengebilde nach Trocknung mindestens 15 Gew.-% der Mischung aus a) und b) aufweist.

10. Trägereinlage gemäß einem oder mehreren der Ansprüche 1 bis 9, **dadurch gekennzeichnet, dass** das gefüllte textile Flächengebilde nach Trocknung im Wesentlichen vollständig mit der Mischung aus a) und b) gefüllt ist.

11. Trägereinlage gemäß einem oder mehreren der Ansprüche 1 bis 10, **dadurch gekennzeichnet, dass** das der gewichtsmäßige Anteil der Mischung aus a) und b) nach Trocknung im 15 bis 300 Gew.-% des Flächengewichts der textilen Fläche beträgt.

12. Trägereinlage gemäß einem oder mehreren der Ansprüche 1 bis 11, **dadurch gekennzeichnet, dass** diese auf mindestens einer Oberfläche eine zusätzliche Schutzfolie aufweist.

13. Trägereinlage gemäß einem oder mehreren der Ansprüche 1 bis 12, **dadurch gekennzeichnet, dass** die zur Füllung eingesetzte Mischung 10 bis 90 Gew.-% wässrige Bitumen-Emulsion und 90 bis 10 Gew.-% an zur Vernetzung befähigtem Additiv, vorzugsweise einem thermisch und/oder selbstvernetzendem Additiv und/oder Stärke aufweist.

14. Trägereinlage gemäß einem oder mehreren der Ansprüche 1 bis 13, **dadurch gekennzeichnet, dass** die wässrige Bitumen-Emulsion grenzflächenaktive Mittel, vorzugsweise anionische, kationische oder nichtionische Mittel, aufweist.

15. Trägereinlage gemäß einem oder mehreren der Ansprüche 1 bis 14, **dadurch gekennzeichnet, dass** die wässrige Bitumen-Emulsion zusätzlich natürliche oder synthetische Latices aufweist, vorzugsweise synthetischen Latex SBS (Styrol-Butadien-Styrol) und/oder synthetischen Latex SBR (Styrolkautschuk-Butadien), Methacryl-Acryl - Copolymere, sowie Polymer-modifizierte Bitumenemulsionen umfasst.

16. Trägereinlage gemäß einem oder mehreren der Ansprüche 1 bis 15, **dadurch gekennzeichnet, dass** die zur Vernetzung befähigten Additiven auf Basis von Harnstoff bzw. Harnstoff/Formaldehyd und/oder Melamin bzw. Melamin/Formaldehyd sind.

17. Trägereinlage gemäß einem oder mehreren der Ansprüche 1 bis 16, **dadurch gekennzeichnet, dass** die Stärke eine natürliche und/oder modifizierte Stärke ist, vorzugsweise eine aus pflanzlichen Rohstoffen gewonnene Stärke.

18. Trägereinlage gemäß einem oder mehreren der Ansprüche 1 bis 17, **dadurch gekennzeichnet, dass** die vorkonfektionerte Trägereinlage ein Flächengewicht zwischen 60 und 2000 g/m², vorzugsweise 100 und 1200 g/m², insbesondere 120 und 1000 g/m², aufweist.

19. Trägereinlage gemäß einem oder mehreren der Ansprüche 1 bis 18, **dadurch gekennzeichnet, dass** die vorkonfektionerte Trägereinlage eine thermische Dimensionsstabilität (TDS) von maximal 5%, besonders bevorzugt maximal 3%, besonders bevorzugt maximal 2,5%, in Längsrichtung und maximal 7%, besonders bevorzugt maximal 5%, besonders bevorzugt maximal 3% in Querrichtung jeweils gemessen gemäß DIN 18192 aufweist.

20. Trägereinlage gemäß einem oder mehreren der Ansprüche 1 bis 19, **dadurch gekennzeichnet, dass** die vorkonfektionerte Trägereinlage eine Höchstzugkraft (in Längsrichtung) von mindestens 100 N/5 cm, besonders bevorzugt mindestens 200 N/5 cm gemessen gemäß DIN 29073, Teil 3 aufweist.

21. Trägereinlage gemäß einem oder mehreren der Ansprüche 1 bis 20, **dadurch gekennzeichnet, dass** die vorkonfektionerte Trägereinlage eine Höchstzugkraft (in Querrichtung) von mindestens 60 N/5 cm, besonders bevorzugt mindestens 150 N/5 cm gemessen gemäß DIN 29073, Teil 3 aufweist.

22. Trägereinlage gemäß einem oder mehreren der Ansprüche 1 bis 21, **dadurch gekennzeichnet, dass** die vorkonfektionerte Trägereinlage einen Perforationswiderstand von mindestens 200 N gemessen gemäß DIN 54 307 aufweist.

23. Verfahren zur Herstellung einer Trägereinlage gemäß Anspruch 1 umfassend folgende Maßnahmen:
a) Bildung eines textilen Flächengebildes und mechanische Verfestigung desselbigen oder Zuführen eines mechanisch verfestigten, textilen Flächengebildes,
b) ggf. Kalandrierung des textilen Flächengebildes und Erhöhung der Dichte des textilen Flächengebildes um min. 50%, insbesondere wenn das textile Flächengebilde erst in Schritt a) gebildet wurde,
c) Sättigung bzw. Tränkung des textilen Flächengebildes mit einer Mischung enthaltend:
i) mindestens wässrige Bitumen-Emulsion und
ii) mindestens einem zur Vernetzung befähigtem Additiv, vorzugsweise einem thermisch und/oder selbstvernetzendem Additiv und/oder Stärke,
d) Verpressung bzw. Abquetschen der gesättigten bzw. getränkten textilen Fläche, wobei ggf. überschüssige Mengen der Mischung aus Schritt c) entfernt werden,
e) Trocknen der vorkonfektionierten Trägereinlage,
g) ggf. Aufbringen einer Schutzfolie,
h) Abkühlen, ggf. Zuschneiden, und Aufrollen der vorkonfektionierten Trägereinlage.

24. Verwendung mindestens einer vorkonfektionierten Trägereinlage gemäß den Ansprüchen 1 bis 22 zur Herstellung bituminierten Dachbahnen.

25. Bituminierte Dachbahn enthaltend mindestens eine Trägereinlage gemäß den Ansprüchen 1 bis 22

## Claims

1. A prefabricated base interlining containing at least a textile fabric whose weight per unit area is 50 to 500 g/m², wherein the preceding indication refers to a textile fabric without chemical binder and other additives, **characterized in that** the textile fabric was filled with a mixture containing:
a) at least an aqueous bitumen emulsion and
b) at least one cross-linking enabled additive, preferably a thermal and/or self-cross-linking additive and/or at least one starch.

2. The base interlining according to claim 1, **characterized in that** the textile fabric has additional reinforcements.

3. The base interlining according to claim 1 or 2, **characterized in that** the base interlining has at least a further textile fabric, which is different from the first-mentioned textile fabric.

4. The base interlining according to one or more of claims 1 to 3, **characterized in that** the textile fabric is formed out of fibers made of synthetic polymers.

5. The base interlining according to claim 4, **characterized in that** the textile fabric is a non-woven made of synthetic polymer fibers, in particular of melt-spinnable polymer materials.

6. The base interlining according to claim 7, **characterized in that** the textile fabric is a non-woven fabric based on polyester fibers, wherein these are available as staple fibers and/or continuous fibers.

7. The base interlining according to one or more of claims 1 to 6, **characterized in that** the textile fabric has no chemical binder.

8. The base interlining according to one or more of claims 3 to 7, **characterized in that** the further textile fabric is a non-woven fabric based on inorganic fiber-materials, in particular glass and/or mineral materials is and wherein the concentration of chemical binders is up to 10 % by weight (with reference to the textile fabric).

9. The base interlining according to one or more of claims 1 to 8, **characterized in that** the filled textile fabric has, after drying, at least 15 % by weight of the mixture of a) and b).

10. The base interlining according to one or more of claims 1 to 9, **characterized in that** the filled textile fabric is, after drying, essentially fully filled with the mixture of a) and b).

11. The base interlining according to one or more of claims 1 to 10, **characterized in that** the weight portion of the mixture of a) and b) after drying is 15 to 300 % by weight of the weight per unit area of the textile surface.

12. The base interlining according to one or more of claims 1 to 11, **characterized in that** it has at least an additional protective foil on a surface.

13. The base interlining according to one or more of claims 1 to 12, **characterized in that** the mixture used for filling has 10 to 90 % by weight of an aqueous bitumen-emulsion and 90 to 10 % by weight of a cross-linking enabled additive, preferably a thermal and/or self-cross-linking additive and/or starch.

14. The base interlining according to one or more of claims 1 to 13, **characterized in that** the aqueous bitumen emulsion has surface-active agents, preferably anionic, cationic or non-ionic agents.

15. The base interlining according to one or more of claims 1 to 14, **characterized in that** the aqueous bitumen emulsion additionally comprises natural or synthetic latices, preferably synthetic latex SBS (styrene-butadiene-styrene) and/or synthetic latex SBR (styrene rubber-butadiene), methacryl-acryl-copolymers, as well as polymer-modified bitumen emulsions.

16. The base interlining according to one or more of claims 1 to 15, **characterized in that** the cross-linking enabled additive are based on urea resp. urea/formaldehyde and/or melamine resp. melamine/formaldehyde.

17. The base interlining according to one or more of claims 1 to 16, **characterized in that** the starch is a natural and/or modified starch, preferably starch obtained from vegetable raw materials.

18. The base interlining according to one or more of claims 1 to 17, **characterized in that** the prefabricated base interlining has a weight per unit area between 60 and 2000 g/m², preferably 100 and 1200 g/m², in particular 120 and 1000 g/m².

19. The base interlining according to one or more of claims 1 to 18, **characterized in that** the prefabricated base interlining has a thermal dimensional stability (TDS) of 5% maximum, particularly preferably of 3% maximum, particularly preferably of 2.5% maximum in the longitudinal direction and of 7% maximum, particularly preferably 5% maximum, particularly preferably 3% maximum in the transverse direction, each measured according to DIN 18192.

20. The base interlining according to one or more of claims 1 to 19, **characterized in that** the prefabricated base interlining has a maximum tractive force (in the longitudinal direction) of at least 100 N/5 cm, particularly preferably 200 N/5 cm, measured according to DIN 29073, Part 3.

21. The base interlining according to one or more of claims 1 to 20, **characterized in that** the prefabricated base interlining has a maximum tractive force (in the transverse direction) of at least 60 N/5 cm, particularly preferably 150 N/5 cm, measured according to DIN 29073, Part 3.

22. The base interlining according to one or more of claims 1 to 21, **characterized in that** the prefabricated base interlining has a perforation resistance of at least 200 N measured according to DIN 54 307.

23. A method for the production of a base interlining according to claim 1, comprising the measures of:
a) formation of a textile fabric and mechanical bonding thereof or introduction of a mechanically solidified textile fabric,
b) if necessary, calendaring of the textile fabric and increasing of the density of the textile fabric by min. 50%, in particular when the textile fabric was formed only in step a),
c) saturation or impregnation of the textile fabric with a mixture containing:
i) at least an aqueous bitumen emulsion and
ii) at least one cross-linking enabled additive, preferably a thermal and/or self-cross-linking additive and/or starch
d) pressing or squeezing out the saturated or impregnated textile surface, wherein any excess amounts of the mixture from step c) are removed,
e) drying of the prefabricated base interlining,
g) optionally applying a protective foil,
h) cooling, optionally cropping, and rolling up of the prefabricated base interlining.

24. Use of at least one prefabricated base interlining according to claims 1 to 22 for manufacturing bituminized roofing sheets.

25. A bituminized roofing sheet containing at least one base interlining according to claims 1 to 22.

## Revendications

1. Garniture de support prémoulée contenant au moins un tissu dont le poids superficiel est compris entre 50 et 500 g/m², cette dernière donnée se rapportant à un tissu dans liant ou autre additif, **caractérisée en ce que** le tissu a été rempli avec un mélange contenant :
a) au moins une émulsion de bitume aqueuse et
b) au moins un additif se prêtant à la réticulation, préférablement un additif thermique ou autoréticulant ou au moins un amidon.

2. Garniture de support selon la revendication 1, **caractérisée en ce que** le tissu est renforcé par d'autres moyens supplémentaires.

3. Garniture de support selon les revendications 1 ou 2, **caractérisée en ce que** la garniture de support présente au moins un autre tissu différent de celui mentionné précédemment.

4. Garniture de support selon une ou plusieurs des revendications 1 à 3, **caractérisée en ce que** le tissu est constitué de fibres provenant de polymères synthétiques.

5. Garniture de support selon la revendication 4, **caractérisée en ce que** le tissu est un textile non-tissé en fibres de polymères synthétiques, notamment en matériaux de polymères pouvant être tissés à l'état fondu.

6. Garniture de support selon la revendication 7, **caractérisée en ce que** le tissu est un textile non-tissé à base de fibres de polyester, ces derniers étant présents sous la forme de fibres continues ou de fibres continues.

7. Garniture de support selon une ou plusieurs des revendications 1 à 6, **caractérisée en ce que** le tissu ne présente aucun liant chimique.

8. Garniture de support selon une ou plusieurs des revendications 3 à 7, **caractérisée en ce que** l'autre tissu est un textile non tissé à base de matériaux fibreux anorganiques, notamment de verre ou d'autres matériaux minéraux, et que sa teneur en liants chimiques peut aller jusqu'à 10 % en poids (par rapport au poids du tissu).

9. Garniture de support selon une ou plusieurs des revendications 1 à 8, **caractérisée en ce que** le tissu rempli présente suite au séchage au moins 15 % en poids du mélange en a) et en b).

10. Garniture de support selon une ou plusieurs des revendications 1 à 9, **caractérisée en ce que** suite au séchage, le tissu rempli est essentiellement complètement rempli du mélange obtenu en a) et en b).

11. Garniture de support selon une ou plusieurs des revendications 1 à 10, **caractérisée en ce que** le pourcentage en poids du mélange en a) et en b) est compris suite en séchage entre 15 et 300 % en poids du poids superficiel du tissu.

12. Garniture de support selon une ou plusieurs des revendications 1 à 11, **caractérisée en ce que** cette dernière présente un film protecteur supplémentaire sur au moins une surface d'exposition.

13. Garniture de support selon une ou plusieurs des revendications 1 à 11, **caractérisée en ce que** le mélange servant au remplissage présente entre 10 et 90 % en poids d'émulsion de bitume aqueuse et entre 90 et 10 % en poids d'additif se prêtant à la réticulation, préférablement un additif autoréticulant ou un amidon.

14. Garniture de support selon une ou plusieurs des revendications 1 à 13, **caractérisée en ce que** l'émulsion de bitume aqueuse présente un agent tensioactif, préférablement un agent anionique, cationique ou non ionique.

15. Garniture de support selon une ou plusieurs des revendications 1 à 14, **caractérisée en ce que** l'émulsion de bitume aqueuse présente des latices naturels ou synthétiques et comprend préférablement du latex synthétique SBS (styrène-butadiène-styrène) ou un latex synthétique SBR (styrène-butadiène), des copolymères de méthacrylates-acrylates, ainsi que des émulsions de bitume modifiées aux polymères.

16. Garniture de support selon une ou plusieurs des revendications 1 à 15, **caractérisée en ce que** les additifs se prêtant à la réticulation sont à base d'urée ou d'urée/formaldéhyde, ou de mélamine ou de mélamine/formaldéhyde.

17. Garniture de support selon une ou plusieurs des revendications 1 à 16, **caractérisée en ce que** l'amidon est un amidon naturel ou modifié, préférablement un amidon obtenu à partir d'une matière première végétale.

18. Garniture de support selon une ou plusieurs des revendications 1 à 17, **caractérisée en ce que** la garniture de support prémoulée présente un poids superficiel compris entre 60 et 2000 g/m², préférablement 100 et 1200 g/m², notamment 120 et 1000 g/m².

19. Garniture de support selon une ou plusieurs des revendications 1 à 18, **caractérisée en ce que** la garniture de support prémoulée présente une stabilité dimensionnelle thermique (TDS) maximale de 5 %, préférablement de 3 % et idéalement de 2,5 % sur la longueur, et de 7 %, préférablement 5 %, idéalement 3 % dans la direction transversale, les mesures étant établies selon DIN 18192.

20. Garniture de support selon une ou plusieurs des revendications 1 à 19, **caractérisée en ce que** la garniture de support prémoulée présente une force de traction maximale (dans le sens de la longueur) d'au moins 100 N/5 cm, idéalement d'au moins 200 N/5 cm mesuré selon DIN 29073, partie 3.

21. Garniture de support selon une ou plusieurs des revendications 1 à 20, **caractérisée en ce que** la garniture de support prémoulée présente une force de traction maximale (dans le sens de transversal) d'au moins 60 N/5 cm, idéalement d'au moins 150 N/5 cm mesuré selon DIN 29073, partie 3.

22. Garniture de support selon une ou plusieurs des revendications 1 à 21, **caractérisée en ce que** la garniture de support prémoulée présente une résistance à la perforation d'au moins 200 N mesuré selon DIN 54 307.

23. Procédé de fabrication d'une garniture de support selon la revendication 1 comprenant les étapes suivantes :
a) Formation d'un tissu et consolidation mécanique de ce dernier, ou introduction d'un tissu mécaniquement consolidé,
b) ou calandrage du tissu et augmentation d'au moins 50 % de la densité du tissu, notamment si le tissu n'a été formé qu'à l'étape a),
c) saturation ou imprégnation du tissu avec un mélange comprenant :
i) au moins une émulsion de bitume aqueuse et
ii) au moins un additif se prêtant à la réticulation, idéalement un additif thermique ou autoréticulant ou un amidon,
d) pressage ou écrasement du tissu saturé ou imprégné, l'excédent de mélange obtenu à l'étape c) étant alors éliminé,
e) séchage de la garniture de support prémoulée,
g) application d'un film protecteur au besoin,
h) refroidissement et découpage, le cas échéant, puis l'enroulement de la garniture de support prémoulée.

24. Utilisation d'au moins une garniture de support prémoulée selon les revendications 1 à 22 pour la fabrication de membranes de toiture bituminées.

25. Membranes de toiture bituminées contenant au moins une garniture de support selon les revendications 1 à 22.
